# EUROPÄISCHE PATENTSCHRIFT

(11) **EP 1 577 166 B1**
(45) Veröffentlichungstag und Bekanntmachung des Hinweises auf die Patenterteilung: **01.12.2010**
(21) Anmeldenummer: 05001284.8
(22) Anmeldetag: 22.01.2005
(51) Int. Cl.: B60R 13/02, B29C 41/00, B29C 41/08, B29K 33/04, B29K 79/00, B29K 75/00

(54) **Verfahren zur Herstellung einer hautartigen Verkleidung, insbesondere für Kraftfahrzeug-Ausstattungsteile.**
Process for manufacturing a skin type lining, in particular for automotive trim parts.
Procédé de fabrication d'un revêtement en forme de peau, en particulier pour garniture de véhicules automobiles.

(30) Priorität: 18.02.2004 DE 102004008205; 15.11.2004 DE 102004055096
(43) Veröffentlichungstag der Anmeldung: 21.09.2005
(73) Patentinhaber: GRAMMER AG, 92224 Amberg (DE)
(72) Erfinder: Kurz, Helmut, 92237 Sulzbach-Rosenberg (DE); Hrouda, Michael, 93309 Kehlheim (DE)
(74) Vertreter: Ostriga, Sonnet, Wirths & Roche

(56) Entgegenhaltungen:
- WO-A-00/23239
- DE-A1- 19 942 616
- DE-U1- 29 821 409
- US-A1- 2003 104 168
- US-B1- 6 544 449

## Beschreibung

Die Erfindung betrifft ein Verfahren zur Herstellung einer hautartigen Verkleidung entsprechend dem Oberbegriff des Anspruchs 1.

Es ist bekannt, insbesondere Raumausstattungsteile von Kraftwagen, wie z.B. Armauflagen, Mittelkonsolen, Türverkleidungen, Instrumententafeln und andere Verkleidungsteile, die im Kraftwageninnenraum Anwendung finden, mit einer etwa hautartigen Verkleidung zu versehen. Eine solche hautartige Verkleidung soll sowohl das visuelle als auch das taktile Empfinden des Fahrzeugbenutzers ansprechen. So versieht man die Oberfläche einer solchen hautartigen Verkleidung mit ansprechenden Farben oder mit einer besonderen Struktur, z.B. mit einer Lederstruktur, um das Wertempfinden des Fahrzeugbenutzers visuell positiv zu beeinflussen.

Was das taktile Empfinden des Fahrzeugbenutzers anlangt, so soll eine hautartige Verkleidung sich angenehm anfühlen und angreifen, d.h. vorteilhafte berühr- und druckhaptische Eigenschaften aufweisen.

Die US 6 544 449 B1 (vgl. dort Spalte 2, Zeile 31 bis 67) - ähnlich auch die US 5 885 662 A - offenbart eine hautartige Verkleidung, insbesondere für Kraftfahrzeug-Ausstattungsteile, mit mindestens einer Farbpigmente enthaltenden Schicht. Die Verkleidung enthält mindestens zwei Schichten, nämlich eine eine Außenoberfläche bildende, die Farbpigmente enthaltende mindestens einlagige Lackschicht und eine hinter der Lackschicht liegende mindestens einlagige Tragschicht.

Die US 6 544 449 B1 offenbart entsprechend dem Oberbegriff des Anspruchs 1 ein Verfahren zur Herstellung einer hautartigen Verkleidung von Kraftwagen, bei welchem mindestens ein Farbpigmente enthaltendes flüssiges polymeres Reaktionsgemisch auf eine formbildende Oberfläche eines Werkzeugs aufgebracht wird, wobei zunächst eine einen Vernetzer enthaltende reaktive polymere wässrige ein- oder mehrkomponentige Dispersion einer Lackschicht auf eine eine beliebige Gestaltung und Oberflächenstruktur aufweisende Gravurfläche eines Werkzeugs ein- oder mehrlagig aufgespritzt wird. Dabei werden anschließend reaktive Polymere ein- oder mehrlagig aufgespritzt, wobei sowohl die Lackschicht als auch die Tragschicht mittels Druckgas und/oder mittels Druckluft aufgespritzt werden.

Ausgehend von dem durch die US 6 544 449 B1 bekannten Verfahren, besteht die der Erfindung zugrunde liegende Aufgabe in der Schaffung einer verbesserten Anbringung der Tragschicht. Diese Aufgabe wird entsprechend den Merkmalen des Oberbegriffs des Anspruchs 1 erfindungsgemäß gemeinsam mit dessen kennzeichnenden Merkmalen dadurch gelöst, dass eine einen Vernetzer enthaltende reaktive polymere wässrige ein- oder mehrkomponentige Dispersion einer Tragschicht auf die Hinterseite der Lackschicht ein- oder mehrlagig aufgespritzt wird.

Sowohl das Aufbringen der Lackschicht als auch das Aufbringen der Tragschicht geschieht mit einer variabel einstellbaren Materialdosierung, mit einer variabel einstellbaren Materialzerstäubung, mit einer variabel einstellbaren Spritzstrahlformung und mit einer variabel einstellbaren Spritzstrahilenkung.

Die Materialtemperatur sowohl der Lackschicht-Dispersion als auch der Tragschicht-Dispersion beträgt bevorzugt etwa 20°C bis etwa 120°C.

Sowohl bei der Lackschicht als auch bei der Tragschicht kann die Materialzusammensetzung ein- oder mehrkomponentig sein.

Lackschicht und Tragschicht werden nacheinander auf die form bildende Gravurfläche aufgespritzt. Die Gravurfläche kann z.B. von einer temperierbaren Schale vorzugsweise aus Metall, wie z.B. aus Aluminium, Stahl oder Nickel, bestehen. Es hat sich als zweckmäßig erwiesen, die Schale, d.h. die Gravurfläche, zu erwärmen, und zwar bis auf eine Betriebstemperatur von ca. 120°C.

Das erfindungsgemäße Verfahren findet sowohl bei einfachen Konturen, so z.B. bei ebenen und Konturen einfacher Geometrie, als auch bei komplexen, hinterschnittenen Konturen, Verwendung.

Vorrichtungsmäßig kann das erfindungsgemäße Verfahren dadurch verwirklicht werden, dass ein Düsen-Spritzkopf relativ zur formbildenden Gravur oder, umgekehrt, die formbildende Gravur relativ zum Düsen-Spritzkopf bewegt wird.

Zur Erzeugung hinterschnittener Oberflächen hat es sich bewährt, den Düsen-Spritzkopf entlang aller Freiheitsgrade raumbeweglich auszubilden.

Der Düsen-Spritzkopf ist zweckmäßig als Zweistoffspritzkopf zur Verteilung der wässrigen Dispersionen mittels Druckgas oder Druckluft ausgebildet.

Die Lackschicht weist eine kompakte Struktur auf. Die Lackschicht wird unter Hinzugabe von Druckgas und/oder von Druckluft aufgebracht, d.h. aufgespritzt. Bei dieser feinsten gas- oder luftunterstützten Zerstäubung beträgt die Tröpfchengröße der reaktiven wässrigen polymeren Dispersion etwa 5 µ bis 100 µ, vorzugsweise etwa 30 µ bis etwa 60µ.

Die Lackschicht kann eine Lage oder mehrere Lagen aufweisen.

Die Dicke der Lackschicht beträgt zwischen 10 µ und 300 µ, vorzugsweise zwischen 60 µ bis 90 µ.

Die feinste Gas- und/oder luftunterstützte Zerstäubung der reaktiven wässrigen polymeren Dispersion für die Lackschicht gestattet eine homogene und blasenfreie Oberfläche, welche, bedingt durch Aufspritzen auf eine Formgravur (Gravurfläche eines Werkzeugs), deren Struktur, z.B. deren Narbung, fehlerfrei wiedergibt.

Außerdem kann es zweckmäßig sein, die Lackschicht in mehreren Farben nebeneinander aufzutragen, wobei auch Effektlackierungen möglich sind.

Die Farbe bzw. der Farbton einer jeden Lackschicht wird durch Zugabe entsprechender Farbpigmente eingestellt.

Weiterhin kann vorgesehen sein, dass die Lackschicht an sich bekannte, die Lichtstabilität bewirkende Materialbestandteile enthält.

Die Tragschicht kann aus einer polymeren Elastomerschicht bestehen, welche ebenfalls aus einer wässrigen Dispersion hergestellt wird. Diese besteht erfindungsgemäß aus einer reaktiven wässrigen PUR-Dispersion. Als Vernetzer enthält die Tragschicht ebenfalls Isocyanat oder Carbodiimid oder vorzugsweise Polycarbodiimid. Die Tragschicht verleiht der Verkleidungshaut die Festigkeit.

Auch die Tragschicht kann einlagig oder mehrlagig ausgebildet sein, sie kann aus einer ein- oder mehrkomponentigen Materialzusammensetzung bestehen. Die Dicke der Tragschicht beträgt vorzugsweise etwa 0,3 mm bis etwa 1,0 mm.

Die Tragschicht wird ebenfalls mit Hilfe von Druckgas oder Druckluft aufgespritzt. Durch die so erzielte feinste gas- oder luftunterstützte Zerstäubung wird eine Tröpfchengröße von etwa 5 µm bis 100 µm, vorzugsweise von etwa 30 µ-60 µm erzeugt.

Die Tragschicht selbst der Verkleidungshaut kann beispielsweise mittels PUR-Schaum hinterschäumt werden und zusammen mit einem den PUR-Schaum hinterlagernden Träger, der aus einer geeigneten Form- oder Pressmasse bestehen kann, das mit der qualitativ anspruchsvollen Oberfläche versehene Verkleidungsteil darstellen.

In den Zeichnungen sind sowohl die Verkleidungshaut als auch die Vorrichtung mit diesbezüglichem Verfahren beispielhaft schematisch dargestellt, es zeigen
Fig. 1 in räumlicher Darstellung einen Teilbereich eines Verkleidungsteils,
Fig. 2 einen Teilquerschnitt entsprechend dem in Fig. 1 mit II eingekreisten Detail und
Fig. 3 eine Vorrichtung zum Herstellen einer Verkleidungshaut.

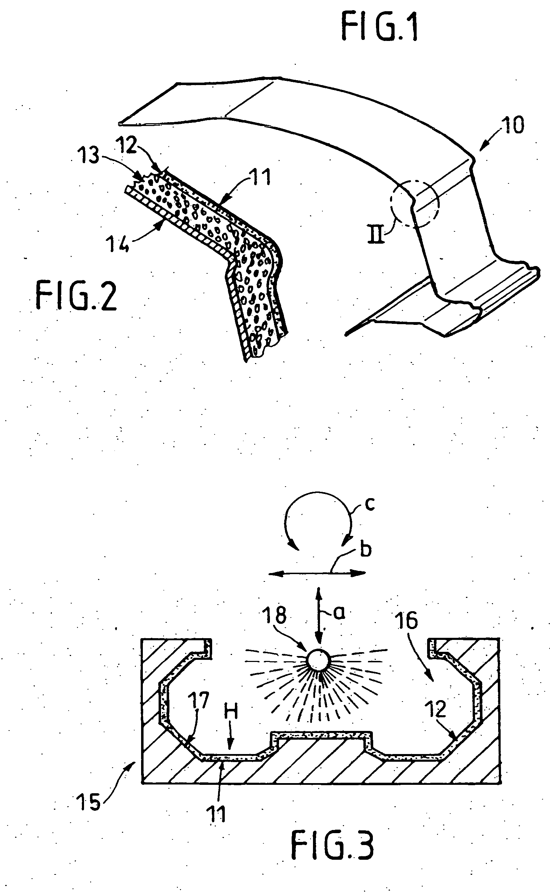

In Fig. 1 ist ein Teilbereich eines Verkleidungsteils, wie z.B. einer Instrumententafel, mit der Bezugsziffer 10 bezeichnet.

Der Querschnitt gemäß Fig. 2 zeigt eine Hautschicht, nämlich die Lackschicht 11, eine Tragschicht 12, eine PUR-Schaumschicht 13 sowie einen Träger 14.

Die Lackschicht 11 ist aus einer reaktiven wässrigen polymeren Dispersion entstanden, welche Acrylat oder Polyacrylat und als Vernetzer Carbodiimid oder vorzugsweise Polycarbodiimid enthält. Die Dicke der Lackschicht 11 beträgt etwa 100 µ.

Die Tragschicht 12 ist aus einer reaktiven wässrigen PUR-Dispersion entstanden, welche als Vernetzer ebenfalls Carbodiimid oder vorzugsweise Polycarbodiimid enthält.

Insbesondere die Lackschicht 11 enthält die erforderlichen Farbpigmente.

Die Tragschicht 12 weist eine Dicke zwischen 0,3 und 1 mm auf.

Die Tragschicht 12 ist von der PUR-Schaumschicht 13 hinterlagert, welche mehrfach so dick wie die Tragschicht 12 ist. Alle Schichten 11, 12, 13 verkleiden schließlich das formbestimmende Tragteil 14 des Verkleidungsteils 10. Bei dem Tragteil 14 kann es sich beispielsweise um ein Kunststoffspritzgussteil, um ein Blasformteil oder um ein Pressteil handeln.

In Fig. 3 sind Vorrichtung und Verfahren zur Herstellung einer Verkleidungshaut schematisch dargestellt.

Eine Werkzeugform 15, beispielsweise aus einem Chrom-Nickelstahl und oder aus Aluminium, mit einem hinterschnittenen Formhohlraum 16 weist eine sich im Querschnitt etwa polygonartig erstreckende Gravur (Gravurfläche) 17 auf. Die Gravur 17 kann eine Oberflächenstrukturierung, beispielsweise eine lederähnliche Narbung, aufweisen. Die Werkzeugform 15 ist zweckmäßig in nicht dargestellter Weise, beispielsweise mittels elektrischer Heizpatronen oder mittels Temperierflüssigkeit führender Kanäle, beheizbar. Dabei wird die Betriebstemperatur z.B. auf 80°C eingestellt.

In den Formhohlraum 16 ragt ein schematisch dargestellter zur Verarbeitung von Druckgas und/oder Druckluft und der jeweiligen reaktiven wässrigen polymeren Dispersion für die Schichten 11 und 12 geeigneter Düsen-Spritzkopf 18 hinein.

Der Düsen-Spritzkopf 18 soll entsprechend den Pfeildarstellungen a, b und c in allen Freiheitsgraden raumbeweglich sein. Auf diese Weise ist es möglich, unter Einbeziehung von Hinterschnitten zunächst die Lackschicht 11 und anschließend die Tragschicht 12 der insgesamt mit H bezeichneten Verkleidungshaut in die Werkzeugform 15 unter Verdüsung der betreffenden Dispersion einzuspritzen.

## Patentansprüche

1. Verfahren zur Herstellung einer hautartigen Verkleidung (H), insbesondere für Kraftfahrzeug-Ausstattungsteile, wie für Armlehnen, Mittelkonsolen, Türverkleidungen, Instrumententafeln od. dgl., von Kraftwagen, bei welchem mindestens ein Farbpigmente enthaltendes flüssiges polymeres Reaktionsgemisch auf eine formbildende Oberfläche (17) eines Werkzeugs (15) aufgebracht wird, wobei zunächst eine einen Vernetzer enthaltende reaktive polymere wässrige ein- oder mehrkomponentige Dispersion einer Lackschicht (11) auf eine eine beliebige Gestaltung und Oberflächenstruktur, wie z.B. eine Ledemarbung, aufweisende, Gravurfläche (17) eines Werkzeugs (15) ein- oder mehrlagig aufgespritzt wird, wobei sowohl die Lackschicht (11) als auch die Tragschicht (12) mittels Druckgas und/oder mittels Druckluft aufgespritzt werden, **dadurch gekennzeichnet, dass** eine einen Vernetzer enthaltende reaktive polymere wässrige ein- oder mehrkomponentige Dispersion einer Tragschicht (12) auf die Hinterseite der Lackschicht (11) ein- oder mehrlagig aufgespritzt wird.

2. Verfahren nach Anspruch 1, **dadurch gekennzeichnet, dass** die Materialdosierung der Dispersion für die Lackschicht (11) und/oder der Dispersion für die Tragschicht (12) variabel eingestellt werden.

3. Verfahren nach Anspruch 1 oder nach Anspruch 2 **dadurch gekennzeichnet, dass** die Materialzerstäubung der Dispersion für die Lackschicht (11) und/oder der Dispersion für die Tragschicht (12) variabel eingestellt werden.

4. Verfahren nach einem der Ansprüche 1 bis 3, **dadurch gekennzeichnet, dass** die Spritzstrahlformung und/oder die Spritzstrahllenkung der Dispersion für die Lackschicht (11) und/oder der Dispersion für die Tragschicht (12) variabel eingestellt werden.

5. Verfahren nach einem der Ansprüche 1 bis 4, **dadurch gekennzeichnet, dass** die Materialtemperatur sowohl der Dispersion für die Lackschicht (11) als auch der Dispersion für die Tragschicht (12) etwa 20 °C bis etwa 120 °C beträgt.

6. Verfahren nach einem der Ansprüche 1 bis 5, **dadurch gekennzeichnet, dass** sowohl die Dispersion für die Lackschicht (11) als auch die Dispersion für die Tragschicht (12) auf eine eine Betriebstemperatur von ca. 60 C bis 120 °C erwärmte Gravurfläche eines Werkzeugs aufgebracht wird.

7. Verfahren nach einem der Ansprüche 1 bis 6, **dadurch gekennzeichnet, dass** sowohl die Dispersion für die Lackschicht (11) als auch die Dispersion für die Tragschicht (12) mittels eines vorzugsweise raumbeweglich angeordneten Zweistoff-Düsen-Spritzkopfes (18) aufgebracht wird.

## Claims

1. A method of producing a skin-like trim (H), in particular for motor vehicle fixtures, such as for motor vehicle arm rests, central consoles, door trim, instrument panels or the like, in which at least one liquid polymeric reaction mixture containing colouring pigments is applied onto a shape-forming surface (17) of a mould (15), a reactive polymeric aqueous single- or multi-component coating layer (11) dispersion containing a crosslinking agent initially being sprayed in a single coat or multiple coats onto an engraved surface (17) comprising any desired design and surface texture, such as for example a leather grain, of a mould (15), both the coating layer (11) and the backing layer (12) being sprayed on by means of compressed gas and/or by means of compressed air, **characterised in that** a reactive polymeric aqueous single- or multi-component backing layer (12) dispersion containing a crosslinking agent is sprayed in a single coat or multiple coats onto the reverse side of the coating layer (11).

2. A method according to claim 1, **characterised in that** the dispersion for the coating layer (11) and/or the dispersion for the backing layer (12) may be variably dispensed.

3. A method according to claim 1 or claim 2, **characterised in that** the dispersion for the coating layer (11) and/or the dispersion for the backing layer (12) may be variably atomised.

4. A method according to any one of claims 1 to 3, **characterised in that** the spray jet of the dispersion for the coating layer (11) and/or of the dispersion for the backing layer (12) may be variably shaped and/or directed.

5. A method according to any one of claims 1 to 4, **characterised in that** the material temperature both of the dispersion for the coating layer (11) and of the dispersion for the backing layer (12) amounts to approx. 20°C to approx. 120°C.

6. A method according to any one of claims 1 to 5, **characterised in that** both the dispersion for the coating layer (11) and the dispersion for the backing layer (12) are applied onto an engraved surface of a mould heated to an operating temperature of approx. 60°C to 120°C.

7. A method according to any one of claims 1 to 6, **characterised in that** both the dispersion for the coating layer (11) and the dispersion for the backing layer (12) are applied by means of a two fluid nozzle spray head (18) which is preferably arranged in spatially mobile manner.

## Revendications

1. Procédé de fabrication d'un revêtement (H) en forme de peau, en particulier pour garnitures de véhicules automobiles, telles que des accoudoirs, consoles centrales, habillages de portière, tableaux de bord ou analogues, de voitures automobiles, dans lequel au moins un mélange de réaction polymère liquide, contenant des pigments de couleur, est appliqué sur une surface (17) formatrice d'image d'un outil (15), où, d'abord, une dispersion à un ou plusieurs composants, aqueuse polymère réactive, contenant un agent de réticulation, d'une couche de vernis (11) est appliquée par projection en une ou plusieurs couches sur une surface de gravure (17), présentant une configuration et une structure de surface quelconques, tel que, par exemple, une grenure de cuir, d'un outil (15), où tant la couche de vernis (11) qu'également la couche support (12) sont appliquées par projection, à l'aide d'un gaz comprimé et/ou à l'aide d'air comprimé, **caractérisé en ce qu'**une dispersion à un ou plusieurs composants, aqueuse polymère réactive, contenant un agent de réticulation, d'une couche support (12) est appliquée par projection en une ou plusieurs couches sur la face arrière de la couche de vernis (11).

2. Procédé selon la revendication 1, **caractérisé en ce que** le dosage matière de la dispersion pour la couche de vernis (11) et/ou de la dispersion pour la couche support (12) est réglé de manière variable.

3. Procédé selon la revendication 1 ou selon la revendication 2, **caractérisé en ce que** la pulvérisation du matériau de la dispersion pour la couche de vernis (11) et/ou de la dispersion pour la couche support (12) est réglée de manière variable.

4. Procédé selon l'une des revendications 1 à 3, **caractérisé en ce que** la formation de jet de pulvérisation et/ou la déviation du jet de pulvérisation de la dispersion pour la couche de vernis (11) et/ou de la dispersion pour la couche support (12) sont réglées de manière variable.

5. Procédé selon l'une des revendications 1 à 4, **caractérisé en ce que** la température matière, tant de la dispersion pour la couche de vernis (11), qu'également de la dispersion pour la couche support (12), est d'environ 20°C à environ 120°C.

6. Procédé selon l'une des revendications 1 à 5, **caractérisé en ce que**, tant la dispersion pour la couche de vernis (11), qu'également la dispersion pour la couche support (12), sont appliquées sur une surface de gravure, chauffée à une température de fonctionnement dans la fourchette d'environ 60°C à 120°C, d'un outil.

7. Procédé selon l'une des revendications 1 à 6, **caractérisé en ce que**, tant la dispersion pour la couche de vernis (11), qu'également la dispersion pour la couche support (12), sont appliquées à l'aide d'une tête de projection à buses bi-matière (18) disposée de préférence de manière mobile dans l'espace.
